# EUROPEAN PATENT SPECIFICATION

(11) **EP 4 056 386 B1**
(45) Date of publication and mention of the grant of the patent: **13.11.2024**
(21) Application number: 21162312.9
(22) Date of filing: 12.03.2021
(51) Int. Cl.: B60C 11/24

(54) **A TIRE**
REIFEN
PNEUMATIQUE

(43) Date of publication of application: 14.09.2022
(73) Proprietor: Nokian Renkaat Oyj, 37101 Nokia (FI)
(72) Inventor: HEIKKINEN, Lauri, 37101 Nokia (FI)
(74) Representative: Berggren Oy

(56) References cited:
- CN-A- 101 407 160
- DE-U1- 202012 001 590
- GB-A- 448 223
- JP-A- 2006 123 703
- JP-A- S5 911 903
- KR-A- 20170 052 395
- US-A1- 2020 108 668

## Description

### Technical field

This invention relates to a tire comprising a tread wear indicator.

### Background

Tires have a tread pattern on their exterior surface. The tread pattern is designed to provide a running surface of the tire for ground-contacting purposes. However, the tread gets worn down with use. When the tread pattern is worn, the tire can be unsafe, for example, under wet or icy conditions. Thus, worn tires may cause e.g. road accidents.

A depth of a groove of the tread can be measured to determine whether the tread pattern is worn so that the tire is unsafe in use.

US2020108668A1 discloses a tire wear indication system designed to visually-represent wear and tear on vehicle tires. DE202012001590U1 discloses a tread guard consisting of the same rubber compound as the tire to be manufactured. CN101407160A discloses a tire tread which is used for a tire and comprises a visual comprehensive indicator, wherein at least one visual comprehensive indicator is embedded into the tire tread on the scheduled wearing depth. GB448223A discloses a tread provided with one or more rubber inserts which present differently colored surfaces during the progressive wear of the tread, for indicating the wear of a tyre. JP2006123703A discloses a tire wear monitoring device to monitor wear of a tread surface of a pneumatic tire that is constituted by burying a different color rubber member for wear monitoring having a color different from rubber of a tread rubber layer on a bottom part of the tread rubber layer. JPS5911903A discloses a colored layer provided to the back side of a tread consisting of black colored rubber of strong wearing resistance, in which normal carbon black is blended as a filling material, and the colored layer and the tread are compounded to be manufactured so that any large difference is not provided between qualities of the rubber except coloring. KR20170052395A discloses a tire comprising a plurality of indicator units which are arranged to be spaced from each other.

However, there is still a need for novel means for warning a user when the tire has been worn down so that it may be unsafe in use.

### Summary

This invention relates to a tire according to claim 1 comprising a tread wear indicator and to a method according to claim 11 for manufacturing such a tire. The tire is preferably a pneumatic tire. Aspects of the invention are characterized by what is stated in the independent claims. Some preferred embodiments of the invention are disclosed in the dependent claims. These and other embodiments of the invention are disclosed in the description and figures.

A tire is typically configured to rotate around an axis of rotation. The tire can comprise a circumferential tread which is configured to form a contact with a surface when the tire is used.

The tire can further comprise a circumferential belt layer disposed radially below the tread. Further, the tire can comprise a first bead region and a second bead region, which bead regions are spaced apart. The first bead region can have a first mounting surface and the second bead region can have a second mounting surface, which mounting surfaces can be adapted for mounting the tire on a rim of a wheel. Still further, the tire can comprise a first sidewall extending between the first bead region and the tread, and a second sidewall extending between the second bead region and the tread. Furthermore, the tire can comprise a carcass ply extending between the first bead region and the second bead region.

The tire can comprise a tread, of which a part is formed by a tread block made of tread material. The tire comprises at least one tread wear indicator. Thus, the tread can comprise the tread wear indicator mounted in the tread block. The tread can have a groove having a groove depth, the groove depth extending from a surface of the tread to the base of the groove. The tread can be configured to form a contact with a surface, such as a road, when the tire is used.

The tread wear indicator may extend to a depth substantially equivalent to the groove depth. In an embodiment, the tread wear indicator extends to a depth at least equivalent to the groove depth. Thus, the tread wear indicator may be able to warn a user when the tread has been worn.

The tread wear indicator comprises a first portion of the tread wear indicator comprising a first visually distinctive material being visually perceptible from the color of said tread block. The tread wear indicator further comprises a second portion of the tread wear indicator comprising a second visually distinctive material being visually perceptible from the color of said tread block. Further, the first portion can be visually perceptible from the second portion. Thus, it may be easy to notice the wornness level of the tire.

The tread wear indicator further comprises a third portion of the tread wear indicator comprising a third visually distinctive material being visually perceptible from the first and the second portions. Further, the third portion may be visually perceptible from the color of said tread block. Thanks to the third portion, the wornness level of the tire may be determined more precisely.

The third portion, if used, is preferably left in between the first portion and the third portion.

In an embodiment, the tread wear indicator may consist of two or three portions.

Thus, the wornness level of the tire may be easily detected.

The tread wear indicator may be a polymer member, such as a polymer plug. Thus, the tread wear indicator may be easily manufactured. Further, the tread wear indicator may be manufactured cost-efficiently. Still further, properties of the tread wear indicator may be easily controlled.

The tread wear indicator may comprise rubber. In an embodiment, the tread wear indicator comprises the tread material. Thus, the properties of the tread wear indicator may be substantially same as the properties of the tread of the tire.

The tread wear indicator comprises one or more materials differing from the tread material. Thus, it is possible to obtain tread wear indicators having some improved properties.

The tread wear indicator comprises at least one of the following materials:
- liquid silicone rubber (LSR) and
- high temperature vulcanized (HTV) silicone.

The total amount of the above-mentioned materials may be equal to or more than 50 wt.%, more preferably equal to or more than 70 wt.%, and most preferably equal to or more than 90 wt.%, calculated from the total weight of the tread wear indicator. These materials may be used to obtain a tread wear indicator, which can be easily seen, and which may have suitable properties for the tread.

The tread wear indicator may mainly consist of:
- liquid silicone rubber (LSR), and
- high temperature vulcanized (HTV) silicone,

The total amount of these materials may be equal to or more than 50 wt.%, more preferably equal to or more than 70 wt.%, and most preferably equal to or more than 90 wt.%, calculated from the total weight of the tread wear indicator. Thus, the tread wear indicator may be a polymer member, such as a polymer plug, formed mainly from silicone rubber. These materials may be used to obtain an improved tread wear indicator which is easily seen from the tread. Further, the tread wear indicator comprising said material(s) may have good properties for the tread. Particularly, softness of said materials may be improved for a purpose of the tread wear indicator.

The first portion of the tread wear indicator comprises a first longitudinal length in a longitudinal direction of the tread wear indicator, which first longitudinal length is at least 15% of the total longitudinal length of the tread wear indicator. The first longitudinal length is preferably at least 20%, more preferably at least 30% and most preferably at least 35% of the total longitudinal length of the tread wear indicator. Further, the first longitudinal length is preferably less than 80%, more preferably equal to or less than 60%, and most preferably equal to or less than 50% of the total longitudinal length of the tread wear indicator. Thus, the tread wear indicator may be able to warn a user when the tread has been worn. Advantageously, the first portion is the base portion of the tread wear indicator.

The second portion of the tread wear indicator comprises a second longitudinal length in the longitudinal direction of the tread wear indicator. The second longitudinal length is at least 15% of the total longitudinal length of the tread wear indicator. The second longitudinal length is preferably at least 20%, more preferably at least 25% and most preferably at least 30% of the total longitudinal length of the tread wear indicator. Further, the second longitudinal length is preferably less than 80%, more preferably equal to or less than 60%, and most preferably equal to or less than 40%, calculated of the total longitudinal length of the tread wear indicator. Thus, it may be easy to determine reliably the wornness level of the tire. Further, it may be easy to notice the current wornness level of the tire. The first portion can be, at least partly, nearer the bottom of the indicator than the second portion. In an embodiment wherein the tread wear indicator comprises only two portions, the second longitudinal length is preferably in a range between 20% and 80%, more preferably in a range between 40% and 60%, calculated from the total longitudinal length of the tread wear indicator.

In an embodiment, the tread wear indicator comprises a top portion, which is placed on the second portion. In this embodiment, a longitudinal length of the top portion in the longitudinal direction of the tread wear indicator may be in a range between 1% and 5%, calculated from the total longitudinal length of the tread wear indicator. Thus, the top portion may be substantially thin layer having its own purpose.

Therefore, the second portion may be a top portion of the tread wear indicator, or it may be placed directly below the top portion of the tread wear indicator. In an embodiment, the second portion forms the top surface of the tread wear indicator. This may simplify a structure of the tread wear indicator. Thus, manufacturing costs of the tread wear indicator may be decreased. In another embodiment, a portion other than the second portion forms the top portion of the tread wear indicator.

A surface of one or more than one portion of the tread wear indicator may have at least one symbol, such as at least one number. The symbol(s) on surface(s) of portion(s) of the tread wear indicator may indicate, for example, the current depth of the groove near the tread wear indicator. Thus, advantageously, the first portion forms at least one symbol, preferably at least one number, on the surface of said portions indicating a depth of the groove on the level of said portion. In addition or alternatively, the second portion may form at least one symbol, preferably at least one number, on the surface of said portion indicating a depth of the groove on the level of said second portion. Still further, in addition or alternatively, the third portion may form at least one symbol, preferably at least one number, on the surface of said portion indicating a depth of the groove on the level of said third portion. The symbols, and particularly the numbers, may improve an easiness to notice a current wornness level of the tire.

A top surface of the tread wear indicator may comprise a pattern having a depth or a height smaller than 1.5 mm, preferably equal to or less than 1.0 mm, more preferably equal to or less than 0.8 mm, and most preferably equal to or less than 0.5 mm. Said depth of height may be equal to or more than 0.1 mm, more preferably equal to or more than 0.15 mm, and in an advantageous embodiment, equal to or more than 0.2 mm. This pattern can be used as a break-in indicator of a tire. Preferably, in this embodiment,
- the tire is a studded tire,
- a tread block of the tire comprising the tread wear indicator comprises a stud, and
- preferably, the tread wear indicator is located in the vicinity of said stud.

The tread wear indicator can have a first cross section at the first portion of the tread wear indicator and a second cross section at the second portion of the wear indicator. The first cross section of the first portion may differ from the second cross section of the second portion. The first cross section may have a different shape and/or a color compared with the second cross section. The tread wear indicator may further have a third cross section at the third portion of the tread wear indicator. The third cross section may have a different shape and/or a color compared with the first and/or the second cross section.

An area of the first cross section may be greater than an area of the second cross section, determined from the maximum cross section areas of the first and second portions. Thus, the tread wear indicator may be firmly fixed into a recess. Further, if the cross section area of the base portion is greater than the cross section area of the top portion, it may be easier to determine whether the tread pattern is worn so that the tire is unsafe in use.

The longitudinal direction (200z) of the tread wear indicator may form an angle (α) between 70 and 110 degrees relative to the surface of the tread of the tire at the location of the tread wear indicator. Preferably, the angle (α) relative to the surface of the tread of the tire at the location of the tread wear indicator is in a range between 80 and 100 degrees. Most preferably, the angle (α) relative to the surface of the tread of the tire at the location of the tread wear indicator is in a range between 85 and 95 degrees, such as approximately 90 degrees. This may improve the easiness of the manufacturing process. Further, thanks to said angle, the tread wear indicator may be easily installed into a tread block of a tire after the tire has been manufactured.

The tire can comprise a recess in the tread block, extending to a depth of at least equivalent to the groove depth of the tire. The tread wear indicator can be mounted into the recess.

The longitudinal direction of the recess may form an angle between 70 and 110 degrees, preferably between 80 and 100 degrees, relative to the surface of the tread of the tire at the location of the recess. Said angle may improve the easiness of the manufacturing process. Further, thanks to said angle, the tread wear indicator may be easily installed into the recess.

The tread wear indicator has a form of a plug.

The tread wear indicator may taper, preferably the tread wear indicator tapers from the bottom of the tread wear indicator to the top of the tread wear indicator. The wear indicator has a form of cylindrical shape, preferably a form of a tapered cylindrical shape which tapers from the bottom of the tread wear indicator to the top of the tread wear indicator. Thus, the tread wear indicator may be firmly fixed into the tread block.

As discussed, the tread wear indicator comprises a third portion comprising a third visually distinctive material. The third visually distinctive material is visually perceptible from
- the second portion,
- the first portion, and
- the tread block.

The tread wear indicator may further comprise a fourth portion comprising a fourth visually distinctive material. The fourth visually distinctive material can be visually perceptible from
- the second portion,
- third portion,
- the first portion, and
- the tread block.

The fourth portion, if used, is preferably left in between the third portion and the second portion.

Further, the tread wear indicator may further comprise one or more other portions comprising visually distinctive material(s) being visually perceptible from other portions.

According to the method of claim 11 for manufacturing a tire according to claim 1, the method comprises the step of installing a tread wear indicator and comprises the following steps:
- providing a tread wear indicator,
- providing a tire comprising a recess for the tread wear indicator, and
- mounting the tread wear indicator into the recess.

In an embodiment, the tread wear indicator may be used, not only as the tread wear indicator, but also as a break-in indicator of a studded tire.

The tread wear indicator can indicate visually to a tire user when the tire has been worn such that it may be unsafe to use. Thus, thanks to the present solution, it is possible to indicate to a user of the tire how much the tire tread has been worn. Further, the novel tread wear indicator may not substantially affect properties of the tire.

### Brief description of the drawings

- Fig. 1a: illustrate an example of a tire,
- Fig. 1b: shows a tread wear indicator according to an embodiment,
- Fig. 1c: illustrates an example of a recess for a tread wear indicator according to an embodiment,
- Fig. 1d: shows a tread wear indicator in a tire, according to an embodiment,
- Figs 2-d: illustrate cross-sections of portions of a tread wear indicator according to an embodiment,
- Fig. 2e: illustrates a tread wear indicator according to an embodiment,
- Figs 3-c: illustrate cross-sections of portions of a tread wear indicator according to an embodiment,
- Fig. 3d: illustrates a tread wear indicator according to an embodiment,
- Figs 4a-d: illustrate examples of tread wear indicators,
- Figs 5a-c: show some photos from experimental tests, wherein

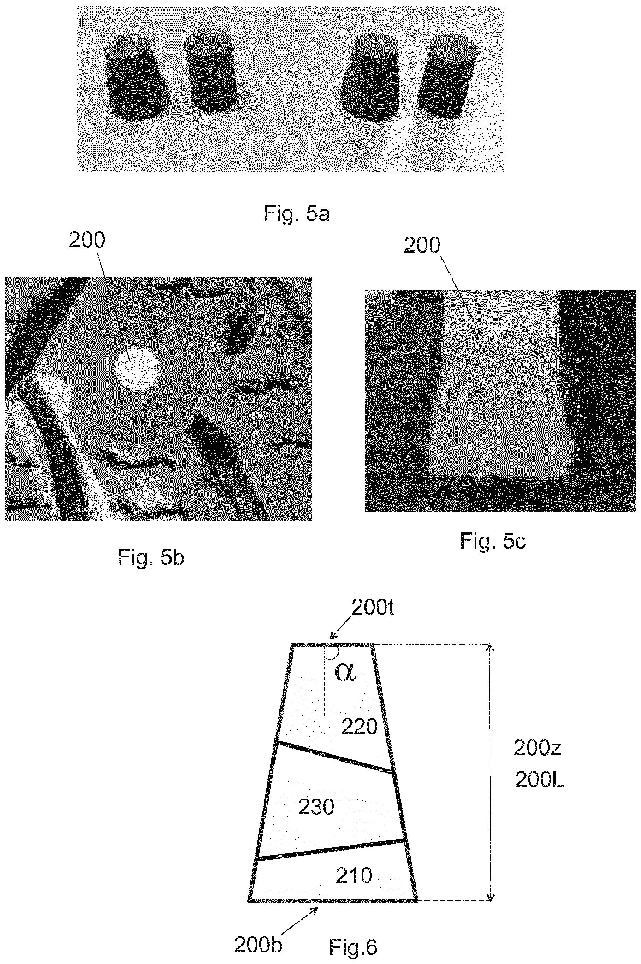

- Fig. 5a: shows some examples of tread wear indicators,
- Fig. 5b: shows a tread wear indicator according to an embodiment, secured in a recess, and
- Fig. 5c: shows, in a half cross section, a tread wear indicator secured in a tread recess according to an embodiment, and
- Fig. 6: illustrates an example of a tread wear indicator.

The Figures are intended to illustrate the general principles of the disclosed solution. Therefore, the illustrations in the Figures are not necessarily in scale or suggestive of precise layout of system components.

### Detailed description

In the text, references are made to the Figures with the following numerals and denotations:
- 100: tire,
- 110: tread block,
- 114: tread pattern,
- 120: tread of tire,
- 130: inner surface of tire,
- 200: tread wear indicator,
- 200b: bottom of the tread wear indicator,
- 200t: top of the tread wear indicator,
- 200T: top portion of the tread wear indicator,
- 200W: (maximum) width of the tread wear indicator,
- 200W1: width of the top surface of the tread wear indicator,
- 200z: longitudinal direction of a tread wear indicator,
- 200L: length of the tread wear indicator in the longitudinal direction,
- 210L: length of the first portion in the longitudinal direction,
- 220L: length of the second portion in the longitudinal direction,
- 230L: length of the third portion in the longitudinal direction,
- 210: first portion of the tread wear indicator,
- 220: second portion of the tread wear indicator,
- 230: third portion of the tread wear indicator,
- 240: fourth portion of the tread wear indicator,
- 300: recess in a tread block,
- 900: contact surface such as a road,
- A1: first area, determined from a cross section of the first portion,
- A2: second area, determined from a cross section of the second portion,
- A3: third area, determined from a cross section of the third portion,
- AXR: axis of rotation of tire,
- SC: circumferential direction, and
- SR: radial direction.

The tire 100 is preferably a pneumatic tire. Such a tire may be, for example, a tire for a passenger motor vehicle, such as a passenger car or a motorcycle. Such a tire 100 may be, for example, a so-called heavy tire, for a heavy machine such as a truck, a caterpillar, a harvester, or a front loader. As is known, such a tire 100 can rotate around an axis of rotation AXR.

Such a tire 100 typically comprises a tread 120, which is in contact with a surface 900, such as a road surface, during the normal use of the tire 100. Such a tread 120 typically comprises a tread pattern 114 which comprises a plurality of tread blocks 110. The tread blocks are made of tread material, such as rubber. The tread material made of rubber may be called as a tread rubber. The tread rubber may be disposed radially outside the belt layer 140 to form the tread 120.

The tread can be configured to form a contact with a surface 900 when the tire 100 is used. An area of the contact of the tread 120 with the surface 900 forms a contact patch. Thus, the contact patch refers to a portion of a motor vehicle's tire 100 that is in contact with a surface 900. Thus, it is the portion of the tire's tread that touches the surface 900, such as a road. Typically, the contact patches of the tires 100 of the motor vehicle are the only connections between the road and the motor vehicle. The contact patch can also be called as footprint of the tire.

The tread 120 has grooves having a groove depth. The groove depth extends from a surface of the tread to the base of the groove. When the tire 100 is in use, the tread of the tire in contact with the surface 900 wears.

The tires can further comprise carcasses, reinforcing belts, plies, sidewalls, inner-liner and beads as known by a person skilled in the art.

The tire can comprise one or more than one tread wear indicators. Preferably, the tire comprises 1 to 10 tread wear indicators. More preferably, the tire comprises at least 2, more preferably at least 3, and most preferably at least 4 tread wear indicators 200, hence, the tire may provide, anytime, at least one tread wear indicator that is not under the contact patch. Further, the tire may comprise equal to or less than 5 tread wear indicators, hence, it is possible to obtain cost-effective solution for the tire.

In this application, a length is measured as a longitudinal length of the tread wear indicator, in the longitudinal direction of the tread wear indicator i.e., from the top of the tread wear indicator to the bottom of the tread wear indicator. If the length changes e.g. within one portion, an average length may be used for determining e.g. a length of said portion.

A cross-direction may refer to a direction transverse to the longitudinal direction. Thus, cross sections (such as a first cross section and a second cross section) can be determined to a direction transverse to the longitudinal direction.

A depth of a groove typically decreases when the tread wears. The grooves are particularly important in wet or icy conditions. When the tread pattern is worn, the tire can be unsafe. Worn tires may cause, for example, road accidents. Thus, the novel tire comprises at least one tread wear indicator 200. The tread wear indicator 200 may be used for warning a user when the tire tread has been worn so that the tire may be unsafe.

The tread wear indicator 200 is a visual indicator that can be used to indicate a worn level of the tread. In order to be the visual indicator, color(s) of the indicator 200 can differ from the tread color.

The tire can comprise the tread 120 comprising the tread wear indicator 200 mounted in the tread block 110. The tread wear indicator 200 may extend to a depth at least equivalent to the groove depth of the tread block in which the indicator 200 is located. Thus, the indicator may not be totally worn down during a usage of the tire.

In an embodiment, the tread wear indicator may extend to a depth that is e.g. less than 5% smaller than the groove depth of the tread block in which the indicator 200 is located. In this case, the tread wear indicator might be totally worn down during a usage of the tire.

A groove in the center of the tire may worn faster than a groove which is not in the center of the tire. Therefore, at least one tread wear indicator 200 is preferably located in the center, or at least near the center, of the tread of the tire.

As discussed, the tread wear indicator 200 can comprise a first portion 210 of the tread wear indicator 200 comprising a first visually distinctive material being visually perceptible from the color of said tread block 110. The tread wear indicator can further comprise a second portion 220 of the tread wear indicator 200 comprising a second visually distinctive material, the second visually distinctive material being visually perceptible from the color of said tread block 110. Further, the first portion 210 can be visually perceptible from the second portion 220. Thus, a shape and/or a color of the first portion 210 can differ from a shape and/or a color of the second portion 220.

The tread wear indicator 200 extends in a longitudinal direction 200z from a bottom 200b of the tread wear indicator 200 to a top 200t of the tread wear indicator 200.

The second portion 220 of the tread wear indicator 200 can be located closer to the surface of the tread block 110 (at the location of the tread wear indicator 200) than the first portion 210 of the tread wear indicator.

Further, the third portion of the tread wear indicator may be located between the first portion 210 and the second portion 220 of the tread wear indicator.

The longitudinal direction 200z may form an angle α relative to the surface of the tread of the tire at the location of the tread wear indicator 200. The tread wear indicator 200 may be inclined at an angle α between 60 and 110 degrees. Advantageously, the angle α is at least 70°, such as in a range between 70 and 110 degrees, more preferably at least 80°, such as in a range between 80 and 100 degrees, and most preferably in a range between 85° and 95°. Thanks to said angles, easiness of predicting a wornness level of the tread may be improved. Thus, thanks to said angles, a user of the tread wear indicator may interpret the wornness level of the indicator easier, compared to other angles. Further, easiness of the installation process may be improved.

The tread wear indicator 200 can be arranged to locate radially inwardly of the surface of the tire, i.e., the tread wear indicator 200 can be located radially inwardly of the surface of the tread block.

The tread wear indicator 200 can have a bottom 200b, a top 200t, and sidewall(s) between the top and the bottom. The sidewall(s) of the tread wear indicator 200 may be cylindrical sidewalls, preferably having tapered cylindrical shape.

Thus, the tread wear indicator 200 is preferably in a form of cylindrical plug, more preferably in a form of a frustoconical plug, which frustoconical plug tapers from the bottom 200b of the indicator 200 to the top 200t of the indicator 200. Thus, the tread wear indicator may be easily and firmly secured into the tread block.

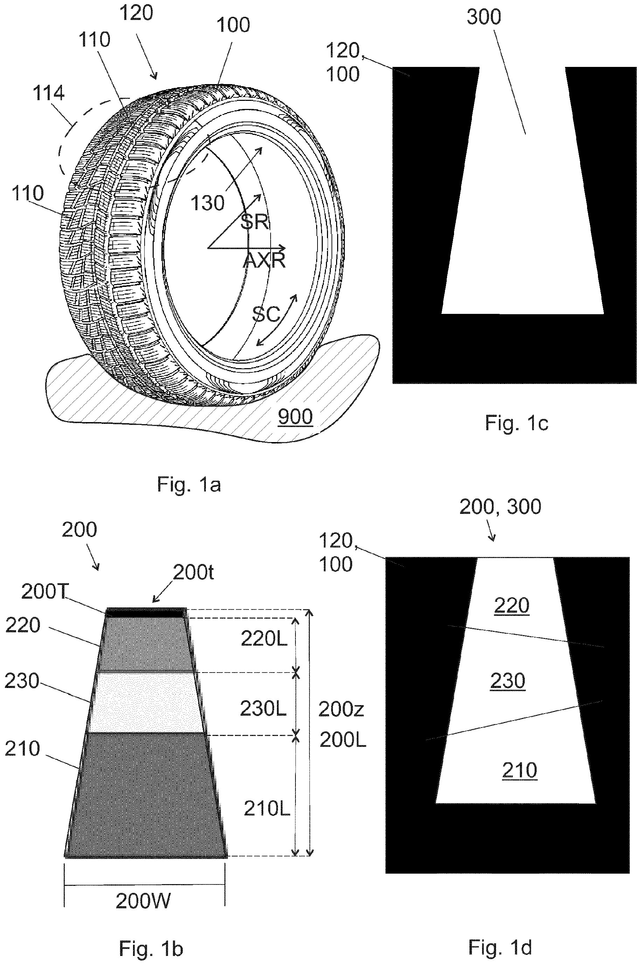

The tread wear indicator 200 may be an insertion which extends throughout the thickness, or at least part of the thickness, of the tread block. The tread wear indicator 200 may wear down simultaneously with the tread block. While the tire wears, the indicator 200 changes its color and/or shape. This is illustrated e.g. in Figures 1b, 2a-e, 3a-d, and 4a-d. Visible surface changes of the tread wear indicator 200 while wearing serves as an indication of the degree of wear of the tire. Thus, the degree of wear of the tire may be visible at any time, hence, it may be possible to know at any time the amount of wear of the tire. This effect may further be improved by using a silicone rubber, preferably a liquid silicone rubber (LSR) and/or high temperature vulcanized (HTV) silicone as a raw material for the tread wear indicator.

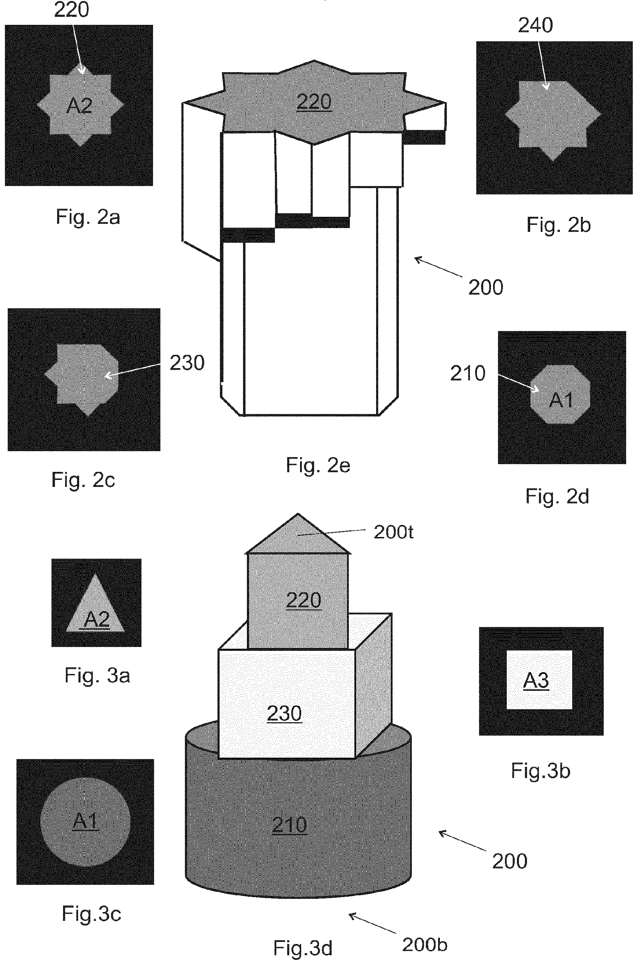

The tread wear indicator 200 is comprised of at least two portions 210, 220, preferably three portions 210, 220, 230. Thus, the indicator 200 has at least two portions, more preferably at least three portions, along its length, the portions having shapes and/or colors differing from each other, and colors differing from the (black) color of the tread block. The portions may be selected to have such shapes and/or colors and a length to alert a driver of a vehicle to the wear level of the tire. In an embodiment, the shape and/or colors may change gradually, at least at some point, within one portion, as shown e.g. in Fig 2e.

Thus, the indicator 200 may comprise two or more than two portions. Thus, the tread wear indicator 200 can comprise the radially inner material forming the first portion 210 and the radially outer material forming the second portion 220. Further, the tread wear indicator 200 may comprise other portions between the first portion and the second portion, the other portions forming the third portion 230 and/or other portions of the tread wear indicator 200. Further, the tread wear indicator may comprise a top portion 200T (shown e.g. in Fig. 1b) on the second position 220.

In an embodiment, the indicator comprises only 4 portions, more preferably only 3 portions or only 2 portions. In this embodiment, the indicator may be manufactured efficiently. Further, it may be easier to interpret the wornness level of the tire if the indicator does not comprise too many portions.

The portions, or at least some of the portions, may be layers. In an embodiment, the tread wear indicator 200 may comprise colored layers one upon another (see e.g. Fig. 1b). Thus, the wornness level of the tread wear indicator may be easily determined. Further, tread wear indicator comprising layers may be manufactured cost-efficiently.

The tread wear indicator 200 may comprise or consist of polymeric and/or elastomeric material(s). Advantageously, the tread wear indicator 200 has substantially same mechanical properties as the material of the tread block so that the tread wear indicator 200 is not affecting the properties of the tire. However, preferably, the tread wear indicator 200 is not made of the tread material. Thus, the tread wear indicator may be easily detected from the tread. Therefore, the tread wear indicator 200 can comprise one or more materials differing from the tread material.

There may be several advantages for manufacturing the tread wear indicator which comprises at least one material differing from the tread material. For example, at least some of the following advantages may be obtained: improved chemical resistance, improved strength, and improved aging properties. Further, some materials keep appearance at original level for extended period, if compared with colored tread rubber.

The tread wear indicator 200 comprises a material distinguishable from the tread rubber for indicating a predetermined amount of tread wear which has occurred in the rubber adjacent the indicator.

The tread wear indicator 200 comprises one or more of the following materials:
- Liquid silicone rubber (LSR) and
- High temperature vulcanized (HTV) silicone, and can further comprise one or more of the following materials:
- Rubber,
- Polyurethane,
- Plastic (preferably PE, PA, and/or PEEK), and
- Reinforced plastics (glass fibre, carbon fibre, or other reinforcing fibre).

The amount of above-mentioned materials is preferably equal to or more than 70 wt.%, more preferably equal to or more than 80 wt.%, and most preferably equal to or more than 90 wt.%, calculated of the total weight of the tread wear indicator 200.

In an embodiment, the tread wear indicator 200 may comprise rubber, such as the tread material. The rubber has some advantages for the tread wear indicator 200, such as
- Easily tailorable properties,
- Wear properties similar to tread material,
- Color can be adjusted, and
- Simple manufacturing process.

The tread wear indicator 200 comprising mainly the same raw material(s) as the tread block is typically easily manufactured. Further, the properties of tread wear indicators 200 comprising tread material are substantially same as the properties of the tread block.

However, some other materials may have some advantages over the rubber of the tread block. Thus, advantageously, the tread wear indicator 200 comprises material(s) differing from the tread material.

The tread wear indicator 200 may comprise polyurethane. The polyurethane may have the following advantages:
- Easily tailorable properties
- Wear properties similar to tire material, and
- Adjustable color.

In addition, the tread wear indicator 200 may comprise plastic, such as polyethylene (PE), polyamide (PA) and/or polyether ketone (PEEK). The plastic may have at least some of the following advantages:
- Some properties can be easily adjusted due to the well-known materials,
- Sharp interfacial layers between different colors, and
- Strong adhesion between the layers.

In an embodiment, the tread wear indicator 200 comprises reinforced plastic, wherein the plastic(s) further comprises glass fibres and/or carbon fibres. This may improve some strength properties of the tread wear indicator.

The tread wear indicator 200 comprises silicone-based material(s). The tread wear indicator 200 comprises liquid silicone rubber (LSR) and could additionally comprise solid silicone rubber.

Advantageously, total amount of the silicone rubber(s) is equal to or more than 50 wt.%, more preferably equal to or more than 70 wt.%, and most preferably equal to or more than 90 wt.%, calculated from the total weight of the tread wear indicator 200. Silicone rubbers, particularly liquid silicone rubber and high temperature vulcanized silicone (HTV), may have several advantages. These materials can be easily seen from the tread block, typically easier than e.g. colored tread rubber. They may further have some or all of following advantages:
- Highly improved temperature resistance (hot & cold),
- Good chemical resistance,
- Suitability for mass production,
- High tear strength,
- Excellent aging properties,
- Easily tailorable properties,
- Wear properties similar to tread material,
- Color can be adjusted,
- Keeps its appearance at original level for extended period during product lifetime, and
- Measurement precision is at high level.

Further, liquid silicone rubber and high temperature vulcanized silicone are considered to be non-harmful materials.

Tread wear indicators comprising high temperature vulcanized silicone (HTV) and/or rubber may be manufactured e.g. by using transfer molding or compression molding as the manufacturing method. Thanks to said molding procedures, the tread wear indicator 200 may have easily controlled manufacturing process.

Tread wear indicators comprising liquid silicone rubber (LSR), polyurethane, and/or plastic (including reinforced plastics) may be manufactured e.g. by using injection molding as the manufacturing method. Thanks to the injection molding and said material(s), the shape of each portion of the tread wear indicator 200 may be easily controlled. From these materials, the liquid silicone rubber may be the most preferred raw material for the tread wear indicator 200. Tread wear indicators 200 consisting of or comprising mainly low-viscosity grades of liquid silicone rubber, may be alternatively manufactured e.g. by using a low-pressure filling.

Tread wear indicator 200 consisting of or comprising at least mainly solid silicone rubber (HTV), may be manufactured e.g. by using at least one of
- Extrusion,
- Coextrusion,
- Compression molding,
- Transfer molding, or
- Calendering.

Thus, manufacturing process of tread wear indicators comprising silicone rubber(s) may be easily controlled.

As discussed, the tread wear indicator 200 is preferably placed in the center of the tread. Advantageously, the wear indicator 200 has substantially same mechanical properties as the tread block. However, as discussed, the material of the wear indicator 200 preferably differs chemically from the material of the tread block.

The tread wear indicator 200 comprises liquid silicone rubber and can additionally also comprise solid silicone rubber. These materials may provide improved properties for the tread wear indicators. Further, thanks to these materials, improved manufacturing methods may be used.

The tread wear indicator 200 is distinguishable visually from the surrounding tread rubber. Thus, the tread wear indicator 200 has a color differing from the surrounding tread rubber. In addition to the above-mentioned materials, the wear indicator 200 may comprise e.g. an optical brightening agent. Thus, at least one of the portions of the tread wear indicator 200 may comprise an optical brightening agent. This may improve the visual perceptibility of the tread wear indicator. The tread wear indicator may further comprise e.g. other additives such as, for example, anti-aging additive(s), antiozonant(s), and/or fluorescent(s).

As discussed, the tread wear indicator 200 comprises the first portion 210 of the tread wear indicator 200, which first portion 210 may form at least part of the base portion of the tread wear indicator 200.

A first volume of the first portion 210 may be, for example, in a range between 15% and 80%, calculated from the total volume of the tread wear indicator 200. Advantageously, the first volume is at least 20 %, more preferably at least 30%, and most preferably at least 40% of the total volume of the tread wear indicator 200. Further, the first volume may advantageously be equal to or less than 80%, more preferably equal to or less than 65%, and most preferably equal to or less than 50%, calculated of the total volume of the tread wear indicator. Thus, it may be easy to see when the wornness level of the tread wear indicator has reached the first portion of the tread wear indicator.

A first longitudinal length 210L of the first portion 210 is at least 15% of the total length of the tread wear indicator and may be, for example, in a range between 15% and 80%, calculated from the total length 200L of the tread wear indicator 200. Advantageously, the first longitudinal length is at least 20 %, more preferably at least 30%, and most preferably at least 35% of the total longitudinal length of the tread wear indicator 200. Further, the first longitudinal length may advantageously be equal to or less than 70%, more preferably equal to or less than 60%, and most preferably equal to or less than 50%, calculated of the total longitudinal length 200L of the tread wear indicator.

In an embodiment, the first length of the first portion 210 may be, for example, at least 1.5 mm, more preferably equal to or more than 2.5 mm, and most preferably equal to or more than 3.5 mm. Further, in this embodiment, the first length of the first portion 210 may be, for example, equal to or less than 6 mm, more preferably equal to or less than 5 mm, and most preferably equal to or less than 4 mm. A tire having a tread wear indicator according to this embodiment may be, for example, a tire for a passenger motor vehicle, such as a passenger car.

In an embodiment, the first length of the first portion 210 may be, for example, at least 3 mm, more preferably equal to or more than 5 mm, and most preferably equal to or more than 7 mm. Further, in this embodiment, the first length of the first portion 210 may be, for example, equal to or less than 15 mm, more preferably equal to or less than 11 mm, and most preferably equal to or less than 9 mm. A tire having a tread wear indicator according to this embodiment may be, for example, a heavy tire for a heavy machine.

As discussed, the tread wear indicator 200 further comprises the second portion 220 of the tread wear indicator 200. The second portion 220 comprises a second visually distinctive material being visually perceptible from the tread material and the first portion 210.

A second volume of the second portion 220 may be, for example, in a range between 15% and 70%, calculated from the total volume of the tread wear indicator 200. Advantageously, the second volume is at least 10 %, more preferably at least 20%, and most preferably at least 30% of the total volume of the tread wear indicator 200. Further, advantageously, the second volume is equal to or less than 55%, more preferably equal to or less than 40%, and most preferably equal to or less than 30%, calculated of the total volume of the tread wear indicator. Thus, it may be easy to see when the tire has started to wear.

A second longitudinal length 220L of the second portion 220 is at least 15% of the total length of the tread wear indicator and may be, for example, in a range between 15% and 80%, calculated from the total length 200L of the tread wear indicator 200. Advantageously, the second longitudinal length is at least 20 %, more preferably at least 25%, and most preferably at least 30% of the total longitudinal length of the tread wear indicator 200. Further, advantageously, the second longitudinal length is equal to or less than 60%, more preferably equal to or less than 50%, and most preferably equal to or less than 40%, calculated of the total longitudinal length 200L of the tread wear indicator. Thus, it is possible to see when the tire has started to wear.

In an embodiment, the second longitudinal length of the second portion 220 may be, for example, at least 1.5 mm, more preferably equal to or more than 2.5 mm, and most preferably equal to or more than 3.0 mm. Further, in this embodiment, the second longitudinal length may be, for example, equal to or less than 6 mm, more preferably equal to or less than 5 mm, and most preferably equal to or less than 4 mm. A tire having a tread wear indicator according to this embodiment may be a tire of a passenger motor vehicle, such as a passenger car. The second longitudinal length of the second portion 220 may be, for example, in a range between 1 mm and 6 mm, preferably in a range between 2.5 mm and 4.5 mm.

In an embodiment, the second longitudinal length of the second portion 220 may be, for example, at least 3 mm, more preferably equal to or more than 4.5 mm, and most preferably equal to or more than 6 mm. Further, in this embodiment, the second longitudinal length may be, for example, equal to or less than 12 mm, more preferably equal to or less than 10 mm, and most preferably equal to or less than 8 mm. A tire having a tread wear indicator according to this embodiment may be, for example, a heavy tire for a heavy machine.

The tread wear indicator may comprise a top portion 200T forming the top surface of the tread wear indicator.

In an embodiment, the second portion 220 of the tread wear indicator 200 is the top portion forming a top surface 200t of the tread wear indicator 200. Thus, the second portion 220 of the tread wear indicator 200 can form the top surface of the tread wear indicator 200.

In another embodiment, the top portion 200T is a separate portion, preferably placed on the second portion of the tread wear indicator.

In an embodiment, the top portion of the tread wear indicator 200 may be made of substantially same color as the tread, hence, in this embodiment, the wear indicator 200 may remain substantially or fully undetected until the top portion has been worn away.

In an example, the tire is a studded tire. Thus, in this embodiment, a tread block of the tire comprises a stud. In this embodiment, the tread wear indicator 200 is preferably located in the vicinity of said stud. It may take some time before studs of new tires are firmly fixed into their place. This typically takes first hundred(s) driving kilometers.

The surface of the tread wear indicator 200 can comprise a pattern having a depth or a height smaller than 1.5 mm, preferably smaller than 1.0 mm, which can be used to determine when the studs are firmly fixed into the tread blocks. Thus, the top portion 220 of the tread wear indicator 200 can have a depth or a height smaller than 1.5 mm. Thus, the driver can be able to judge that the studs of the studded tire have settled into stud holes when said pattern of the tread wear indicator 200 has worn down. In an advantageous example, the length of the pattern is in a range between 0.1 mm and 1.5 mm. Thus, in this advantageous embodiment, the tread wear indicator 200 is also used as a break-in indicator 200 of a tire. Therefore, in an embodiment, a longitudinal length of the top portion may be in a range between 1% and 5% of the total longitudinal length of the tread wear indicator 200.

As discussed, the tread wear indicator 200 comprises a third portion of the tread wear indicator 200. The third portion comprises a third visually distinctive material being visually perceptible from the first and the second portions of the tread wear indicator 200. Further, the third visually distinctive material is visually perceptible from the tread. Thus, the tread wear indicator 200 may comprise a third portion comprising a third visually distinctive material, the third visually distinctive material being visually perceptible from the tread material and the second and/or first portions.

A third length 230L of the third portion 230 is at least 10%, preferably at least 15% calculated from the total length of the tread wear indicator 200. Further, a third length 230L of the third portion 230 may be equal to or less than 30%, more preferably equal to or less than 25%, and most preferably equal to or less than 20%, or equal to or less than 25%, calculated from the total length of the tread wear indicator 200.

A third volume of the third portion 230 may be, for example, at least 10%, more preferably at least 15%, and most preferably at least 20% calculated from the total volume of the tread wear indicator 200. Further, a third volume of the third portion 230 may be equal to or less than 30%, more preferably equal to or less than 25%, and most preferably equal to or less 20%, calculated from the total volume of the tread wear indicator 200.

In an embodiment, the third longitudinal length of the third portion may be, for example, at least 1 mm, more preferably equal to or more than 1.5 mm, and most preferably equal to or more than 2.0 mm. Further, in this embodiment, the third longitudinal length may be, for example, equal to or less than 4 mm, more preferably equal to or less than 3.5 mm, and most preferably equal to or less than 3 mm. A tire having a tread wear indicator according to this embodiment may be, for example, a tire for a passenger motor vehicle, such as a passenger car.

In an embodiment, the third longitudinal length of the third portion may be, for example, at least 1.5 mm, more preferably equal to or more than 2.5 mm, and most preferably equal to or more than 3.0 mm. Further, in this embodiment, the third longitudinal length may be, for example, equal to or less than 9 mm, more preferably equal to or less than 6 mm, and most preferably equal to or less than 4 mm. A tire having a tread wear indicator according to this embodiment may be, for example, a heavy tire for a heavy machine.

The tread wear indicator 200 may further comprise a fourth portion, a fifth portion etc. These portions may be between the first portion 210 and the second portion 220.

In this embodiment, the fourth portion may comprise a fourth visually distinctive material, the fourth visually distinctive material being visually perceptible from the tread material and the other portions. If the tread wear indicator 200 comprises the fourth portion, a volume and/or a length of the fourth portion may be, for example, in a range between 5% and 25%, preferably in a range between 7% and 20% calculated from the total length of the tread wear indicator 200. A length of the fourth portion may be, for example, in a range between 1 mm and 3 mm.

Thus, as discussed, the wear indicator 200 comprises two or more than two differently colored and/or shaped portions, preferably at least three differently colored and/or shaped portions. Said portions may be in a form of layers. The wear indicator 200 has a length, and a width, and a cross-sectional area. The width and the cross-sectional area, and the cross-sectional shape may change along with the length.

In an embodiment, the tread wear indicator consists of two differently colored and/or shaped portions.

In an embodiment, the tread wear indicator consists of three differently colored and/or shaped portions.

In an embodiment, the tread wear indicator consists of four differently colored and/or shaped portions.

Width of the tread wear indicator is measured perpendicular to the longitudinal length of the tread wear indicator. Width of the tread wear indicator may refer to a diameter of the tread wear indicator. The width of the tread wear indicator may change along the longitudinal length of the tread wear indicator. Thus, the tread wear indicator can comprise a minimum width and a maximum width, wherein the minimum width can be equal to or smaller than the maximum width.

The maximum width of the tread wear indicator may be at least 4 mm, more preferably equal to or more 5 mm, and most preferably equal to or more than 6 mm, determined as maximum width of the tread wear indicator. Further, the maximum width of the tread wear indicator is preferably equal to or less than 15 mm, more preferably equal to or less than 10 mm, and most preferably equal to or less than 8 mm determined as maximum width of the tread wear indicator. Thus, it is possible to obtain cost efficiently a tread wear indicator that can be easily seen from the tire. Further, a tread wear indicator having said size may not affect properties of the tread.

In an embodiment, the maximum width of the tread wear indicator may be at least 4 mm, more preferably equal to or more 5 mm, and most preferably equal to or more than 6 mm, determined as maximum width of the tread wear indicator. Further, in this embodiment, the maximum width of the tread wear indicator is preferably equal to or less than 10 mm, more preferably equal to or less than 8.5 mm, and most preferably equal to or less than 7.5 mm determined as maximum width of the tread wear indicator. This kind of width of the tread wear indicator may be particularly suitable for tires of passenger cars.

In an embodiment, the maximum width of the tread wear indicator may be at least 6 mm, more preferably equal to or more than 10 mm, and most preferably equal to or more than 13 mm. According to this embodiment, the maximum width of the tread wear indicator may be equal to or less than 18 mm, more preferably equal to or less than 16 mm, and most preferably equal to or less than 15 mm determined as maximum width of the tread wear indicator member. This kind of width of the tread wear indicator may be particularly suitable for heavy tires. Thus, the tread wear indicator may be easily seen e.g. from heavy tires.

The minimum width of the tread wear indicator is preferably equal to or more than 3 mm, more preferably equal to or more than 4 mm, and most preferably equal to or more than 5 mm, determined as minimum width of the tread wear indicator. Further, the minimum width of the tread wear indicator is preferably equal to or less than 14 mm, more preferably equal to or less than 10 mm, and most preferably equal to or less than 7 mm, determined as minimum width of the tread wear indicator. Thus, it is possible to obtain, cost efficiently, a tread wear indicator that can be easily seen from the tire.

In an advantageous embodiment, the minimum width of the tread wear indicator is equal to or more than 1 mm smaller than the maximum width of the tread wear indicator. In this embodiment, an installability of the tread wear indicator may be improved.

The tread wear indicator 200 has a first cross section at the first portion 210 of the tread wear indicator 200. Further, the tread wear indicator 200 has a second cross section at the second portion 220 of the tread wear indicator 200. The first cross section forms a first area A1. The second cross section forms a second area A2.

The second area A2 of the second cross section can be smaller than the first area A1 of the first cross section.

The first area A1 of the first portion 210 can differ from the second area A2 of the second portion 220. For example, the first area A1 and the second area A2 may have different shapes and/or areas.

A maximum cross-section area of the tread wear indicator 200 is preferably in a range between 20 mm² and 225 mm². A minimum cross-section area of the tread wear indicator 200 is equal to or less than the maximum cross-section area of the tread wear indicator. In an embodiment, the minimum cross section area of the tread wear indicator is from 5% to 30% smaller than the maximum cross-section area of the tread wear indicator. The minimum cross-section area of the tread wear indicator may be, for example, in a range between 8 mm² and 100 mm². Thus, the tread wear indicator 200 can have such a size that it can be easily detected (visually) from the tread of the tire.

An area of the top surface of the tread wear indicator may be in a range between 10 mm² and 100 mm², preferably in a range between 10 mm² and 50 mm², calculated from the top surface of the tread wear indicator. A base area of the tread wear indicator may be in a range between 20 mm² and 180 mm², preferably in a range between 20 mm² and 80 mm² calculated from the bottom surface of the tread wear indicator. Thus, the wornness of the tread wear indicator may be easily seen. Further, if the base area is greater than the top surface area, the tread wear indicator may be more firmly fixed into the recess. The top surface area of the tread wear indicator is preferably at least 10% smaller, more preferably at least 20% smaller, and most preferably at least 30% smaller than the base area of the tread wear indicator. Thus, the tread wear indicator may be firmly fastened into the hole of the tread wear indicator.

Surfaces of one or more than one portions may have one or more than one symbols. The symbol(s) may comprise, for example, at least one number. The number(s) on a surface of a portion of the tread wear indicator 200 may indicate, for example, a current depth of a groove near the tread wear indicator 200.

Thus, a surface of at least one portion of the tread wear indicator 200 can have at least one symbol, such as a number, which may indicate a depth of the groove when the tread wear indicator 200 has worn so that the symbol can be seen. Preferably, the surfaces of at least two portions of the tread wear indicator can have at least one symbol, such as a number. These symbols may indicate a depth of the groove when the tread wear indicator 200 has worn so that the symbol on a surface of any of the portions can be seen.

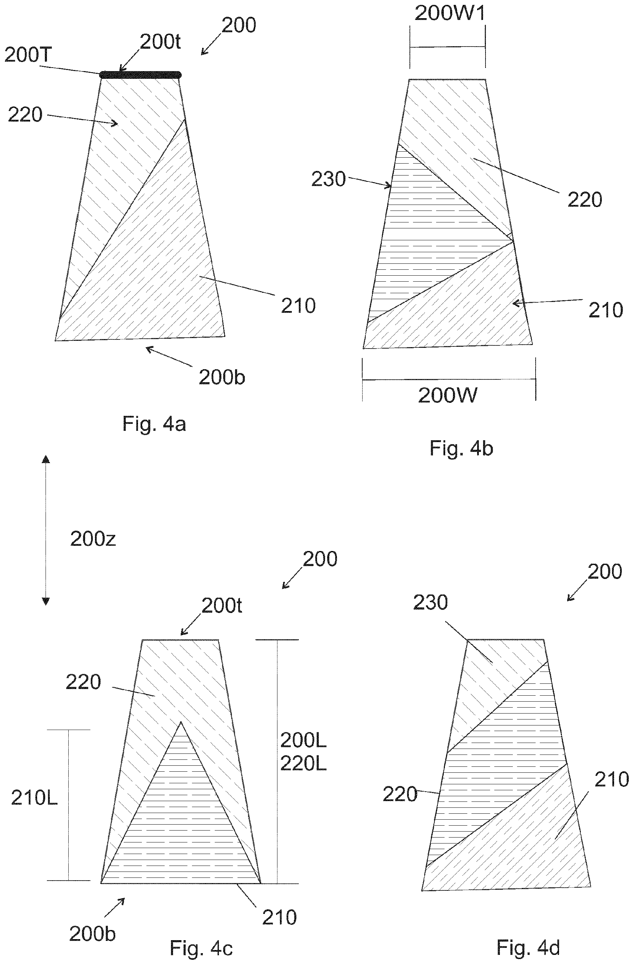

In an embodiment, two portions, such as the first portion 210 and the second portion 220, may be visible to an eye at the same time. This embodiment as can be seen, e.g., from Figs 4a and 4c. In this embodiment, the wear indicator 200 may first show only the second portion 220, thus, the wear indicator 200 may be unicolored. When the tire wears, the surface of the wear indicator 200 may be two-colored, showing at least two portions. Finally, when the amount of wear is such that the tire should be changed into a new one, the wear indicator 200 may be unicolored, showing only the first portion 210 of the wear indicator 200.

Thus, in an example, first only the second portion 220 of the wear indicator 200 is shown, after which another portion, such as the first portion 210, becomes visible and grows in size with wear of the tire, until finally the whole surface of the wear indicator 200 shows the first portion 210, indicating that the tire has reached the end of its life and needs to be changed into a new one.

In an embodiment, the tread wear indicator 200 is a plug extending into the tread block. Thus, the tread wear indicator may be easily secured into the tread block. Further, the tread wear indicator may be easily manufactured.

The tread wear indicator 200 may be a cubical block, a rectangular block, a prismatic plug, a cylindrical plug, or a tapered cylindrical plug (a frusto-conical). The tread wear indicator 200 may have a circular cross-section, or any other form. The wear indicator 200 may have at least one of the following cross-sections: ellipse, circle, triangle, square, rectangle, pentagon, polygon, and star. The circular and ellipse cross-sections may be the most advantageous embodiments because a tread wear indicator having these kinds of cross-sections may be easily manufactured and secured into the recess of the tread.

Advantageously, the wear indicator 200 is designed to fit into a recess 300 in the tread block, to be secured there. Alternatively, the tread wear indicator 200 may be e.g. a strip extending through the tread block.

The length 200L of the tread wear indicator 200 is preferably at least 50%, more preferably equal to or more than 80%, and most preferably equal to or more than 90% calculated from the groove depth of the tread. The length 200L of the tread wear indicator 200 is preferably equal to or less than 130%, more preferably equal to or less than 120%, and most preferably equal to or less than 110% calculated from the groove depth of the tread.

The groove depth of new tires may differ. The groove depth of the new tire may be, e.g. in a range between 6 mm and 60 mm, such as from 6 mm to 16 mm, or from 2 cm to 6 cm, depending on a type of the tire (e.g. for a passenger car, or a heavy tire).

In an embodiment, hardness of the wear indicator 200 is substantially same as hardness of the surrounding tread rubber. Therefore, the hardness of the tread wear indicator may be ±10%, calculated from hardness of the surrounding tread rubber.

The hardness of the first portion 210 of the tread wear indicator is preferably substantially same as the hardness of the second portion 220 of the tread wear indicator. Thus, the hardness of the first portion may be ±10%, calculated from hardness of the second portion. Therefore, properties relating to hardness of the indicator may be substantially same through the tread wear indicator.

In an embodiment, hardness of the tread wear indicator 200 is preferably at least 40 ShA, more preferably at least 45 ShA and most preferably at least 50 ShA. Further, in this embodiment, hardness of the tread wear indicator is preferably equal to or less than 80 ShA, preferably equal to or less than 75 ShA, and most preferably equal to or less than 70 ShA. This embodiment is particularly suitable for summer tires. Thanks to the substantially soft tread wear indicator, the tread wear indicator may be easily fixed to the hole of the tread wear indicator.

In an embodiment, hardness of the tread wear indicator 200 is preferably at least 50 ShA, more preferably at least 52 ShA and most preferably at least 54 ShA. Further, in this embodiment, hardness of the tread wear indicator is preferably equal to or less than 70 ShA, preferably equal to or less than 65 ShA, and most preferably equal to or less than 60 Sha. This embodiment is particularly suitable for winter tires.

In an embodiment, hardness of the tread wear indicator 200 is preferably at least 52 ShA, more preferably at least 54 ShA and most preferably at least 56 ShA. Further, in this embodiment, hardness of the tread wear indicator is preferably equal to or less than 75 ShA, preferably equal to or less than 72 ShA, and most preferably equal to or less than 69 ShA. This embodiment is particularly suitable for all season tires.

Hardness of materials can be determined according to the standard ASTM D2240.

As discussed, tire may have a recess 300 formed in the tread rubber, which recess 300 can be, at least mostly, filled with the tread wear indicator 200. The tread wear indicator 200 may be designed to fit into a recess 300 in the tread block. Advantageously, at least 90%, more preferably at least 95% of the volume of the recess is filled with the tread wear indicator. Thus, the tread wear indicator 200 can be reliably inserted in the recess 300 of the tread block and secured therein.

The tread wear indicator 200 can be located radially inward from the surface of the tread block to a base of the recess 300. The longitudinal direction of the recess 300 forms an angle (α) relative to the surface of the tread of the tire at the location of the recess 300. Advantageously, said angle relative to the surface of the tread of the tire at the location of the recess 300 is in a range between 70 and 110 degrees, more preferably in a range between 80 and 100 degrees, at the location of the recess 300. This may improve the installation process of the tread wear indicator. The tread wear indicator 200 is mounted into the recess 300. The recess 300 can extend to a depth at least equivalent to the groove depth of the tire.

The tire may have a recess 300 of radially outwardly tapering form, formed into the tread block. The recess 300 may be formed of a radially outwardly tapered portion of suitable cross section, such as circular cross section. Thus, the tread wear indicator 200 may be formed of a radially outwardly tapered portion of circular cross section, wherein the tread wear indicator tapers from the bottom to the top of the tread wear indicator. Thanks to the shapes of the recess 300 and the indicator 200, the indicator 200 can be easily secured into the recess 300.

The recess 300 has a predetermined shape having a predetermined length and width. As discussed, and also shown in Figs 1c-d, the recess 300 may taper radially outwardly from the base of the recess 300 along with the length of the recess 300.

The wear indicator 200 may have substantially same size and shape as the recess 300.

A recess 300 may have been formed into a tread block, into which recess 300 the tread wear indicator 200 may have been inserted.

The recess 300 may be formed, for example, during the vulcanization step of the tire. Alternatively, the recess 300 may be formed after the vulcanization of the tire by forming a hole into a tread block of a tire. The tread wear indicator 200 may be inserted into the formed recess 300.

The tread wear indicator 200 may be secured to the recess 300 by using friction, without any other securing means such as an adhesive. In this embodiment, the tread wear indicator 200 as well as the recess 300 preferably taper from the bottom to the top. Thus, it is possible to secure the tread wear indicator into the recess reliable, merely using friction between the indicator and walls of the recess.

Alternatively, or in addition, an adhesive may be used to secure the tread wear indicator 200 into the recess 300. Thus, in an embodiment, an adhesive may be used between the tread wear indicator 200 and at least part of wall(s) and/or bottom of the recess 300. Thus, the indicator 200 can be firmly secured into the recess 300 by using an adhesive.

In an embodiment, the recess 300 comprise a base portion formed on the bottom of the recess 300. The recess 300 may comprise a base portion which opens out near the base of the recess 300 into a base portion comprising enlarged cross-sectional area. The tread wear indicator 200 may be inserted and located, partly, into said base portion.

To improve securement, the tread wear indicator 200 may comprise a flange for insertion into a recess 300 of at least partially complementary shape. To further improve securement, the tread wear indicator 200 may be adhered within the recess 300.

The wear indicator 200 may be installed to the tire after the tire has been manufactured (i.e., after e.g. vulcanizing step of the tire). Alternatively, the tread wear indicator 200 is vulcanized into the tread block during manufacturing process of the tire.

The tread wear indicator 200 wears down substantially simultaneously with the tread of the tire. Therefore, its surface will change its shape and/or color according to the degree of the wear. Therefore, a driver can be able to judge the wear level which has taken place.

While the invention is primarily concerned with pneumatic tires, it can also be applied to solid tires having tread blocks.

The invention has been described with the aid of illustrations and examples. The invention is not limited solely to the above presented embodiments but may be modified within the scope of the appended claims.

## Claims

1. A tire (100) configured to rotate about an axis of rotation (AXR), the tire (100) comprising
- a tread (120), of which a part is formed by a tread block (110) made of tread material, the tread having a groove having a groove depth, the groove depth extending from a surface of the tread to the base of the groove, the tread (120) being configured to form a contact with a surface when the tire (100) is used,
- the tread (120) comprising a tread wear indicator (200) mounted in said tread block (110), the tread wear indicator (200) having a longitudinal length, which longitudinal length of the tread wear indicator is at least 80% calculated from the groove depth,
wherein the tread wear indicator (200) comprises
- a first portion (210) of the tread wear indicator (200) comprising a first visually distinctive material being visually perceptible from the color of said tread block (110), the first portion (210) of the tread wear indicator (200) having a first longitudinal length, and
- a second portion (220) of the tread wear indicator (200) comprising a second visually distinctive material, the second visually distinctive material being visually perceptible from the color of said tread block (110), the second portion (220) of the tread wear indicator (200) having a second longitudinal length,
wherein the first portion (210) of the tread wear indicator is visually perceptible from the second portion (220) of the tread wear indicator, and
wherein the tread wear indicator (200) further comprises a third portion (230) comprising a third visually distinctive material, the third visually distinctive material being visually perceptible from the second and the first portions (210, 220),
the third portion (230) of the tread wear indicator (200) comprising a third longitudinal length,
wherein the first longitudinal length is at least 15% of total longitudinal length of the tread wear indicator (200), the second longitudinal length is at least 15% of the total longitudinal length of the tread wear indicator (200), and the third longitudinal length is at least 10% of the longitudinal length of the tread wear indicator (200),
**characterized in that** the wear indicator (200) is a cylindrical plug, preferably a tapered cylindrical plug, which tapers from the bottom of the tread wear indicator to the top of the tread wear indicator, and the tread wear indicator (200) comprises at least one of
- liquid silicone rubber (LSR), and
- high temperature vulcanized (HTV) silicone.

2. The tire according claim 1, wherein
total amount of
- the liquid silicone rubber (LSR), and
- the high temperature vulcanized silicone (HTV),
is equal to or more than 50 wt.%, more preferably equal to or more than 70 wt.%, calculated from the total weight of the tread wear indicator (200).

3. The tire according to any of the preceding claims, wherein
- the first longitudinal length is at least 30% of total longitudinal length of the tread wear indicator (200), and
- the second longitudinal length is at least 30% of the total longitudinal length of the tread wear indicator (200).

4. The tire according to any of the preceding claims, wherein the third longitudinal length is at least 15% of the longitudinal length of the tread wear indicator (200), and wherein the third portion is preferably left in between the first portion and the second portion.

5. The tire according to any of the preceding claims, wherein a surface of the tread wear indicator (200) comprises a pattern having a depth or a height smaller in a range between 0.1 mm and 1.5 mm, and the tread block preferably comprises a stud.

6. The tire according to any of the preceding claims, wherein the longitudinal direction (200z) of the tread wear indicator forms an angle (α) between 70 and 110 degrees relative to the surface of the tread of the tire at the location of the tread wear indicator.

7. The tire according to any of the preceding claims, wherein the tread wear indicator (200) has
- a first cross section forming a first area (A1) at the first portion (210), and
- a second cross section forming a second area (A2) at the second portion (220), wherein
- the second area (A2) is smaller than the first area (A1), and/or
- the first area (A1) has a different shape compared to the second area (A2).

8. The tire according to any of the preceding claims, wherein the tire comprises a recess (300), and the tread wear indicator (200) is mounted into the recess (300).

9. The tire according to any of the preceding claims, wherein the tread wear indicator comprises a top portion which forms a top surface of the tread wear indicator (200), and a longitudinal length of the top portion is preferably in a range between 1% and 5% calculated from the total longitudinal length of the tread wear indicator (200), the top portion being visually perceptible from the second portion.

10. The tire according to any of the preceding claims, wherein a surface of at least one portion (210, 220, 230, 240) of the tread wear indicator has at least one symbol, such as at least one number.

11. A method for manufacturing a tire according to any of the previous claims, wherein the method comprises a step of installing a tread wear indicator (200), the method comprising:
- providing a tread wear indicator (200),
- providing a tire comprising a recess (300) for the tread wear indicator (200), and
- mounting the tread wear indicator (200) into the recess (300).

## Patentansprüche

1. Reifen (100), der so konfiguriert ist, dass er sich um eine Rotationsachse (AXR) dreht, wobei der Reifen (100) Folgendes umfasst
- eine Lauffläche (120), von der ein Teil durch einen Laufflächenblock (110) aus Laufflächenmaterial gebildet ist, wobei die Lauffläche eine Rille mit einer Rillentiefe aufweist, wobei die Rillentiefe von einer Oberfläche der Lauffläche bis zur Basis der Rille reicht, wobei die Lauffläche (120) so konfiguriert ist, dass sie einen Kontakt mit einer Oberfläche bildet, wenn der Reifen (100) verwendet wird,
- die Lauffläche (120) einen Laufflächenverschleißindikator (200) umfasst, der in dem Laufflächenblock (110) montiert ist, wobei der Laufflächenverschleißindikator (200) eine Längslänge aufweist, wobei die Längslänge des Laufflächenverschleißindikators mindestens 80 % der Rillentiefe beträgt,
wobei der Laufflächenverschleißindikator (200) Folgendes umfasst
- einen ersten Abschnitt (210) des Laufflächenverschleißindikators (200), der ein erstes optisch unterscheidbares Material umfasst, das optisch an der Farbe des Laufflächenblocks (110) erkennbar ist, wobei der erste Abschnitt (210) des Laufflächenverschleißindikators (200) eine erste Längslänge aufweist, und
- einen zweiten Abschnitt (220) des Laufflächenverschleißindikators (200), der ein zweites optisch unterscheidbares Material umfasst, wobei das zweite optisch unterscheidbare Material optisch an der Farbe des Laufflächenblocks (110) erkennbar ist, wobei der zweite Abschnitt (220) des Laufflächenverschleißindikators (200) eine zweite Längslänge aufweist,
wobei der erste Abschnitt (210) des Laufflächenverschleißindikators optisch vom zweiten Abschnitt (220) des Laufflächenverschleißindikators aus wahrnehmbar ist, und
wobei der Laufflächenverschleißindikator (200) ferner einen dritten Abschnitt (230) umfasst, der ein drittes optisch unterscheidbares Material umfasst, wobei das dritte optisch unterscheidbare Material optisch vom zweiten und ersten Abschnitt (210, 220) aus wahrnehmbar ist,
wobei der dritte Abschnitt (230) des Laufflächenverschleißindikators (200) eine dritte Längslänge aufweist,
wobei die erste Längslänge mindestens 15 % der gesamten Längslänge des Laufflächenverschleißindikators (200) beträgt, die zweite Längslänge mindestens 15 % der gesamten Längslänge des Laufflächenverschleißindikators (200) beträgt und die dritte Längslänge mindestens 10 % der Längslänge des Laufflächenverschleißindikators (200) beträgt,
**dadurch gekennzeichnet, dass** der Verschleißindikator (200) ein zylindrischer Stopfen, vorzugsweise ein konischer zylindrischer Stopfen ist, der sich von der Unterseite des Laufflächenverschleißindikators zur Oberseite des Laufflächenverschleißindikators verjüngt, und dass der Laufflächenverschleißindikator (200) mindestens eines der folgenden Materialien umfasst
- Flüssigsilikonkautschuk (LSR) und
- Hochtemperatur-vulkanisiertes (HTV) Silikon.

2. Reifen nach Anspruch 1, wobei
die Gesamtmenge von
- dem flüssigen Silikonkautschuk (LSR) und
- dem hochtemperaturvulkanisierten Silikon (HTV),
gleich oder größer als 50 Gew.-%, besser gleich oder größer als 70 Gew.-% ist, berechnet vom Gesamtgewicht des Laufflächenverschleißindikators (200).

3. Reifen nach einem der vorhergehenden Ansprüche, wobei
- die erste Längslänge mindestens 30 % der gesamten Längslänge des Laufflächenverschleißindikators (200) beträgt und
- die zweite Längslänge mindestens 30 % der gesamten Längslänge des Laufflächenverschleißindikators (200) beträgt.

4. Reifen nach einem der vorhergehenden Ansprüche, wobei die dritte Längslänge mindestens 15 % der Längslänge des Laufflächenverschleißindikators (200) beträgt, und wobei der dritte Abschnitt vorzugsweise zwischen dem ersten Abschnitt und dem zweiten Abschnitt verbleibt.

5. Reifen nach einem der vorhergehenden Ansprüche, wobei eine Oberfläche des Laufflächenverschleißindikators (200) ein Muster mit einer Tiefe oder Höhe im Bereich zwischen 0,1 mm und 1,5 mm aufweist und der Laufflächenblock vorzugsweise einen Stollen aufweist.

6. Reifen nach einem der vorhergehenden Ansprüche, wobei die Längsrichtung (200z) des Laufflächenverschleißindikators einen Winkel (α) zwischen 70 und 110 Grad relativ zur Oberfläche der Reifenlauffläche an der Stelle des Laufflächenverschleißindikators bildet.

7. Reifen nach einem der vorhergehenden Ansprüche, wobei der Laufflächenverschleißindikator (200) Folgendes aufweist
- einen ersten Querschnitt, der einen ersten Bereich (A1) am ersten Abschnitt (210) bildet, und
- einen zweiten Querschnitt, der einen zweiten Bereich (A2) am zweiten Abschnitt (220) bildet, wobei
- der zweite Bereich (A2) kleiner als der erste Bereich (A1) ist und/oder
- der erste Bereich (A1) im Vergleich zum zweiten Bereich (A2) eine andere Form aufweist.

8. Reifen nach einem der vorhergehenden Ansprüche, wobei der Reifen eine Aussparung (300) aufweist und der Laufflächenverschleißindikator (200) in der Aussparung (300) montiert ist.

9. Reifen nach einem der vorhergehenden Ansprüche, wobei der Laufflächenverschleißindikator einen oberen Abschnitt umfasst, der eine obere Oberfläche des Laufflächenverschleißindikators (200) bildet, und eine Längslänge des oberen Abschnitts, berechnet von der gesamten Längslänge des Laufflächenverschleißindikators (200), vorzugsweise in einem Bereich zwischen 1 % und 5 % liegt, wobei der obere Abschnitt vom zweiten Abschnitt aus optisch wahrnehmbar ist.

10. Reifen nach einem der vorhergehenden Ansprüche, wobei eine Oberfläche von mindestens einem Abschnitt (210, 220, 230, 240) des Laufflächenverschleißindikators mindestens ein Symbol, beispielsweise mindestens eine Zahl, aufweist.

11. Verfahren zur Herstellung eines Reifens nach einem der vorhergehenden Ansprüche, wobei das Verfahren einen Schritt des Einbauens eines Laufflächenverschleißindikators (200) umfasst, wobei das Verfahren Folgendes umfasst:
- Bereitstellen eines Laufflächenverschleißindikators (200),
- Bereitstellen eines Reifens mit einer Aussparung (300) für den Laufflächenverschleißindikator (200), und
- Anbringen des Laufflächenverschleißindikators (200) in der Aussparung (300).

## Revendications

1. Pneumatique (100) configuré pour tourner autour d'un axe de rotation (AXR), le pneumatique (100) comprenant
- une bande de roulement (120), dont une partie est formée par un bloc de bande de roulement (110) constitué d'un matériau de bande de roulement, la bande de roulement dotée d'une rainure ayant une profondeur de rainure, la profondeur de rainure s'étendant depuis une surface de la bande de roulement jusqu'à la base de la rainure, la bande de roulement (120) étant configurée pour former un contact avec une surface lorsque le pneumatique (100) est utilisé,
- la bande de roulement (120) comprenant un indicateur d'usure de bande de roulement (200) monté dans ledit bloc de bande de roulement (110), l'indicateur d'usure de bande de roulement (200) ayant une longueur longitudinale, laquelle longueur longitudinale de l'indicateur d'usure de bande de roulement est calculée à au moins 80 % de la profondeur de rainure,
dans lequel l'indicateur d'usure de bande de roulement (200) comprend
- une première partie (210) de l'indicateur d'usure de bande de roulement (200) comprenant un premier matériau visuellement distinctif qui est visuellement perceptible à partir de la couleur dudit bloc de bande de roulement (110), la première partie (210) de l'indicateur d'usure de bande de roulement (200) ayant un première longueur longitudinale, et
- une deuxième partie (220) de l'indicateur d'usure de bande de roulement (200) comprenant un deuxième matériau visuellement distinctif, le deuxième matériau visuellement distinctif étant visuellement perceptible à partir de la couleur dudit bloc de bande de roulement (110), la deuxième partie (220) de l'indicateur d'usure de bande de roulement (200) ayant une seconde longueur longitudinale,
dans lequel la première partie (210) de l'indicateur d'usure de bande de roulement est visuellement perceptible à partir de la deuxième partie (220) de l'indicateur d'usure de bande de roulement, et
dans lequel l'indicateur d'usure de bande de roulement (200) comprend en outre une troisième partie (230) comprenant un troisième matériau visuellement distinctif, le troisième matériau visuellement distinctif étant visuellement perceptible à partir de la deuxième et de la première parties (210, 220),
la troisième partie (230) de l'indicateur d'usure de bande de roulement (200) comprenant une troisième longueur longitudinale,
dans lequel la première longueur longitudinale représente au moins 15 % de la longueur longitudinale totale de l'indicateur d'usure de bande de roulement (200), la deuxième longueur longitudinale représente au moins 15 % de la longueur longitudinale totale de l'indicateur d'usure de bande de roulement (200), et la troisième longueur longitudinale représente au moins 10 % de la longueur longitudinale de l'indicateur d'usure de bande de roulement (200),
**caractérisé en ce que** l'indicateur d'usure (200) est un bouchon cylindrique, de préférence un bouchon cylindrique conique, qui se rétrécit depuis le bas de l'indicateur d'usure de bande de roulement jusqu'au sommet de l'indicateur d'usure de bande de roulement, et l'indicateur d'usure de bande de roulement (200) comprend au moins un parmi
- du caoutchouc de silicone liquide (LSR), et
- du silicone vulcanisé à haute température (HTV).

2. Pneumatique selon la revendication 1, dans lequel le montant total
- du caoutchouc de silicone liquide (LSR), et
- du silicone vulcanisé haute température (HTV),
est égal ou supérieur à 50 % en poids, de manière davantage préférée supérieur ou égal à 70 % en poids, calculé à partir du poids total de l'indicateur d'usure de bande de roulement (200).

3. Pneumatique selon l'une quelconque des revendications précédentes, dans lequel
- la première longueur longitudinale représente au moins 30 % de la longueur longitudinale totale de l'indicateur d'usure de bande de roulement (200), et
- la seconde longueur longitudinale représente au moins 30 % de la longueur longitudinale totale de l'indicateur d'usure de bande de roulement (200).

4. Pneumatique selon l'une quelconque des revendications précédentes, dans lequel la troisième longueur longitudinale représente au moins 15 % de la longueur longitudinale de l'indicateur d'usure de bande de roulement (200), et dans lequel la troisième partie est de préférence laissée entre la première partie et la deuxième partie.

5. Pneumatique selon l'une quelconque des revendications précédentes, dans lequel une surface de l'indicateur d'usure de bande de roulement (200) comprend un motif ayant une profondeur ou une hauteur inférieure dans une plage comprise entre 0,1 mm et 1,5 mm, et le bloc de bande de roulement comprend de préférence un goujon.

6. Pneumatique selon l'une quelconque des revendications précédentes, dans lequel la direction longitudinale (200z) de l'indicateur d'usure de bande de roulement forme un angle (α) compris entre 70 et 110 degrés par rapport à la surface de la bande de roulement du pneumatique à l'endroit de l'indicateur d'usure de bande de roulement.

7. Pneumatique selon l'une quelconque des revendications précédentes, dans lequel l'indicateur d'usure de bande de roulement (200) a
- une première section transversale formant une première zone (A1) au niveau de la première partie (210), et
- une seconde section transversale formant une seconde zone (A2) au niveau de la deuxième partie (220), dans lequel
- la seconde zone (A2) est plus petite que la première zone (A1), et/ou
- la première zone (A1) a une forme différente par rapport à la seconde zone (A2).

8. Pneumatique selon l'une quelconque des revendications précédentes, dans lequel le pneumatique comprend un évidement (300), et l'indicateur d'usure de bande de roulement (200) est monté dans l'évidement (300).

9. Pneumatique selon l'une quelconque des revendications précédentes, dans lequel l'indicateur d'usure de bande de roulement comprend une partie supérieure qui forme une surface supérieure de l'indicateur d'usure de bande de roulement (200), et une longueur longitudinale de la partie supérieure est de préférence comprise dans une plage entre 1 % et 5 % calculés à partir de la longueur longitudinale totale de l'indicateur d'usure de bande de roulement (200), la partie supérieure étant visuellement perceptible à partir de la deuxième partie.

10. Pneumatique selon l'une quelconque des revendications précédentes, dans lequel une surface d'au moins une partie (210, 220, 230, 240) de l'indicateur d'usure de bande de roulement comporte au moins un symbole, tel qu'au moins un chiffre.

11. Procédé de fabrication d'un pneumatique selon l'une quelconque des revendications précédentes, dans lequel le procédé comprend une étape d'installation d'un indicateur d'usure de bande de roulement (200), le procédé comprenant :
- la fourniture d'un indicateur d'usure de bande de roulement (200),
- la fourniture d'un pneumatique comprenant un évidement (300) pour l'indicateur d'usure de bande de roulement (200), et
- le montage de l'indicateur d'usure de bande de roulement (200) dans l'évidement (300).
